# EUROPEAN PATENT APPLICATION

(11) **EP 1 632 848 A1**
(43) Date of publication of application: **08.03.2006**
(21) Application number: 04104285.4
(22) Date of filing: 06.09.2004
(51) Int. Cl.: G06F 9/44

(54) **Method of providing patches for software**

(71) Applicant: Irdeto Access B.V., 2132 HD Hoofddorp (NL)
(72) Inventor: Bosscha, Albert-Jan, 2134 VC Hoofddorp (NL); van de Ven, Antonius, Johannes, Petrus, Maria, 3111 PG Schiedam (NL); Dekker, Gerard, Johan, 2151 EB Nieuw Vennep (NL)
(74) Representative: Beetz, Tom

(57) **Abstract**

A method of providing patches for software installed on a plurality of client systems (2-5), each having at least a data processor (12) and memory (13-15) and each being programmed to maintain information representative of an actual patch level and to generate output data by processing input data provided to an installed application with data representative of a required patch level only if the actual patch level is in a pre-defined relation to the required patch level, includes obtaining computer program code for inclusion in a patch, the code being arranged to co-operate with at least part of the software installed on a client system (2-5) to perform a certain function after the patch has been applied in the client system, providing a first patch for application in at least one first client system with an instruction to update the actual patch level maintained in the client system (2-5) to reflect a next level. The method is characterised by providing a second patch for at least one other of the client systems (2-5) with an instruction to update the actual patch level maintained in the client system to reflect the next level. The code is provided only in the first of the first and second patches.

## Description

The invention relates to methods of providing patches for software installed on a plurality of client systems, each having at least a data processor and memory and each being programmed to maintain information representative of an actual patch level
and to generate output data by processing input data provided to an installed application with data representative of a required patch level only if the actual patch level is in a pre-defined relation to the required patch level, which methods include:
obtaining computer program code for inclusion in a patch, the code being arranged to co-operate with at least part of the software installed on a client system to perform a certain function after the patch has been applied in the client system, providing a first patch for application in at least one first client system with an instruction to update the actual patch level maintained in the client system to reflect a next level.

The invention also relates to a data processing system including a processor and memory, programmed to execute such methods.

The invention also relates to a computer program arranged, when run on a programmable processing system to enable the system to carry out such methods.

The invention also relates to a method of processing patches provided to a client system having a processor and memory, an interface for receiving patches and an interface for loading input data for an application installed on the client system, which method includes maintaining information representative of an actual patch level and generating output data by processing input data provided to the application only if the actual patch level is in a pre-defined relation to a required patch level indicated in information provided with the input data,
wherein the client system is configured to update the actual patch level maintained in the client system to reflect a next level upon application of a patch provided with an appropriate instruction.

The invention also relates to a data processing device, including a processor, memory, an interface for receiving patches and an interface for loading input data for an application installed on the data processing device.

The invention also relates to a further computer program.

Examples of the methods defined above are known from EP-A2-0 217 351. That publication discloses a communication control apparatus including a transmit-receive circuit connected to a computer network so as to communicate between a local station an other remote stations, a re-writable storage unit in which a communication program is stored, a comparison unit for determining whether or not a version number of a communication control program in a packet accepted by the transmit-receive circuit is newer than that of the communication control program stored in the storage unit. A controller updates the program on the basis of the output from the comparator by sending to the remote station a message requesting to transfer the newer version of the communication control program.

A problem of the known method is that it requires all the stations to remain identical, or the use of packets with different version numbers. The new version of the communication program must be applicable in all stations if they are all to continue to be involved in exchanges of packets with the same version number.

It is an object of the invention to provide methods of the types mentioned above that allow for enforced updating of the software installed on one of a plurality of client systems and take account of a differentiation between client systems.

This object is achieved by a method of providing patches of the type defined above, which is characterised by providing a second patch for at least one other of the client systems with an instruction to update the actual patch level maintained in the client system to reflect the next level, wherein the code is provided only in the first of the first and second patches.

In the following, the term patch is used to refer to a data construct for providing a programmable processing system with a piece of code suitable for insertion into installed software to correct and/or enhance the installed software. The patch may additionally include code which is run only when the patch is applied, for example to change the value of pointers to data or files used by either or both of the already installed software and any code in the patch to be inserted. Thus, application refers to the process by which a patch accepted by the client system is made functional.

Because both the first client system or systems and the other client system or systems receive the instruction to update the actual patch level to reflect the same value, input data for all client systems can be provided with only one required patch level once all client systems have been updated. Thus, it is not necessary to differentiate between client systems when providing input data for use by the application installed on all of them. Because a patch with a different code content is provided to the other client system or systems, it is possible to take account of different existing configurations of the client systems or to re-configure the first and other client systems in different ways.

According to another aspect of the invention, in the method of providing patches, a target value of at least one identification is provided with each patch, each client system having a filter for accepting a patch only if the values are in respective pre-defined relations to corresponding identifications stored in the client system.

Because the identification is provided with each patch, differentiation between client systems is taken into account without having to communicate with each client system individually prior to providing a patch for the client system. Thus, an efficient manner of updating the software installed on the plurality of client systems is provided. Indeed, the method is suitable for broadcasting or multicasting all patches for all client systems, either over a network or by providing a data carrier with all of the patches on it.

According to an advantageous embodiment, a value of a target owner identification is provided with at least the first patch, each client system being provided with once programmable memory and having a filter allowing the client system to accept a patch only if the target owner identification is in a pre-defined relation to a corresponding owner identification programmed into the once programmable memory.

Thus, it is prevented that a client system applies the wrong patch as a consequence of accidental or intentional unauthorised modification of the identifications stored in the client system.

In a preferred embodiment, a value of a target model identification is provided with at least the first patch, each client system being provided with programmable memory and having a filter allowing the client system to accept a patch only if the target model identification is in a pre-defined relation to a corresponding model identification stored in the programmable memory.

Thus, it is possible to establish different configurations of client systems that were originally identical, by programming a different model identification. This is a relatively efficient manner of providing different versions of a single basic model of the client system.

Preferably, the method further includes providing a patch for a client system, which patch is configured to cause the client system to change the model identification stored in the programmable memory to a different value.

Thus, different versions of a single basic model of a client system can be established even after delivery of the client systems to their respective users, simply by providing the appropriate patches.

In a preferred embodiment, information indicative of the certain patch level is provided with at least the first patch.

This allows the provision of patches that 'skip' a few levels. In a situation where one client system has missed a few patches in a sequence bringing it to a new level, this variant prevents having to apply one by one all the patches that have been missed.

In a preferred embodiment, at least the first patch is provided with information indicative of a patch level required to apply the patch, each client system having a filter allowing the client system to apply the patch only if the actual patch level maintained in the client system is in a pre-defined relation to the patch level required to apply the patch.

Thus, the client system is prevented from applying a patch that requires prior application of an earlier patch to function properly. It thus enforces a particular intended order of application of a series of patches in the client system.

In a preferred embodiment, a patch is provided in at least one Entitlement Management Message for transfer to at least one client system in communication with an associated decoder system, the application in the at least one client system including at least one routine for generating control word data enabling scrambled content data provided to the decoder system to be de-scrambled from at least parts of Entitlement Control Messages forwarded by the associated decoder system to the client system.

This variant is a particularly useful application of the methods according to the invention, because it enforces the use of updated software for generating the control word data. Thus, it can be used to mend a breach of security in the client system. In particular, the breach can be mended in different ways for different client systems.

In a preferred variant, the Entitlement Management Messages are transmitted to the decoder system, the decoder system forwarding the Entitlement Management Messages to the client system.

Thus, an update over the air of client systems at varying locations is made possible.

In a preferred embodiment, wherein the application includes at least one routine for decrypting parts of Entitlement Control Messages containing encrypted control words enabling scrambled content data provided to the decoder system to be de-scrambled, at least parts of the Entitlement Management Messages including the patch are encrypted so as to allow them to be decrypted using at least one control word provided to the decoder system in at least one Entitlement Control Message with information representative of a required patch level corresponding to a latest value of the actual patch level maintained in the client system prior to the application of the patch.

Thus, only client systems that were previously able to generate control words are updated.

In a preferred embodiment, a patch is communicated to at least one of the client systems at a first point in time and input data is first provided to at least one of the client systems with data representative of the next required patch level at a second point in time, separated from the first point in time by an introduction time interval.

Thus, a certain time interval is available for applying the patch in the client system. This allows a broadcast model of patch distribution. The client can be switched off during a first broadcast of the patch, but remain functional until the patch is broadcast again, and received by it. It is also unnecessary to transfer patches to all of a group of client systems in a very short interval of time, thus easing congestion in cases where the patch is transferred over a network.

According to another aspect, the invention provides a data processing system including a processor and memory, programmed to execute a method according to the invention.

According to another aspect, the invention provides a computer program arranged, when run on a programmable processing system to enable the system to carry out a method according to the invention.

According to another aspect of the invention, the method of processing patches provided to a client system is characterised by storing at least one identification value in the client system and allowing the client system to accept a patch only if each stored identification value is in a pre-defined relation to a respective one of a set of at least one target identification value provided with the patch.

Thus, the client system is arranged to accept only a patch intended for it. Because the value of the actual patch level is updated, the client system remains capable of handling input data provided with the same version number to it and any other client systems that receive and apply a patch with a different effect.

A preferred embodiment includes
accepting a patch, and
applying the patch, wherein applying the patch includes executing instructions to re-arrange the configuration of at least part of the memory in the client system.

Thus, the client system is made suitable for executing enhanced software. Furthermore, the client system may also be made suitable for processing input data in a new format necessitated by application of a different patch in another client system processing the same type of input data. In such cases, the functionality of the client system is not necessarily altered in any way by the patch.

According to another aspect, the invention provides a data processing device, including a processor, memory, an interface for receiving patches and an interface for loading input data for an application installed on the data processing device, wherein the device is programmed to carry out a method according to the invention.

The interfaces for receiving patches and for loading input data may be embodied in one interface.

In a preferred embodiment, the interface for receiving patches and the interface for loading input data include a physical interface to a read/write unit in a data processing system external to the data processing device.

Thus, the data processing device need not be equipped with a device for reading storage media. In addition, it can be coupled to a read/write unit comprise in a system connected to a network, so that remote updates over large distances are made possible.

According to another aspect, there is provided a computer program arranged, when run on a programmable processing system including a processor, memory, an interface for receiving patches and an interface for loading input data to enable the programmable processing system to carry out a method according to the invention.

The invention will now be explained in further detail with reference to the accompanying drawings, in which:
Fig. 1 shows an infrastructure suitable for implementing a method of providing patches for smart cards;
Fig. 2 is a schematic illustration of the functional components of a chip in a smart card of Fig. 1; and
Fig. 3 is a schematic illustration of the composition of a model number as maintained in the smart card.

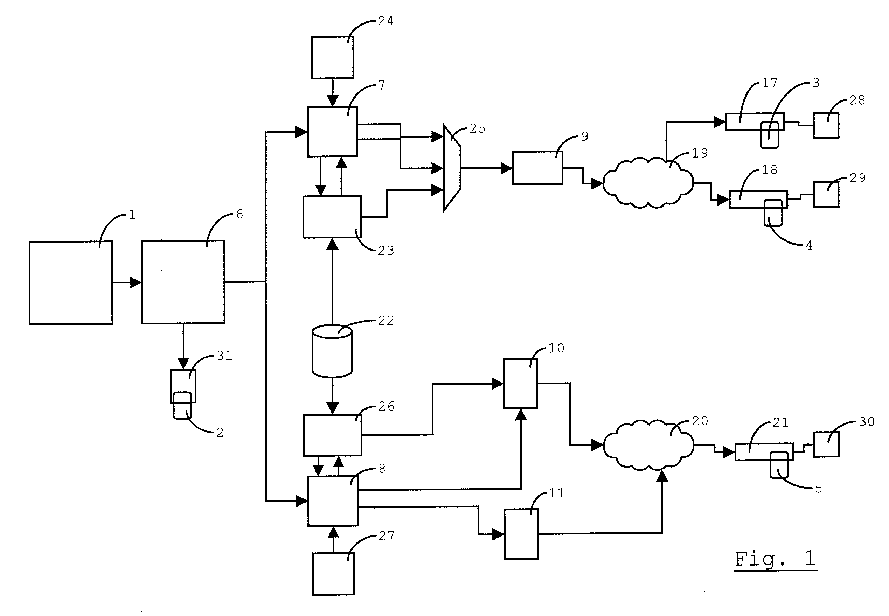

Fig. 1 is used herein to illustrate a method of enhancing the functionality of programmable processing devices used as conditional access subsystems to access content data. A code providing additional functionality is created in a patch creation centre 1. It is to be provided to one or more smart cards (also known as integrated circuit cards). First, second, third and fourth smart cards 2-5, respectively, are shown in Fig. 1 as illustrative of a much larger population of smart cards. To provide the code to the smart cards 2-5, a method of providing patches to be described below is carried out at least once as the patch code moves through the system illustrated in Fig. 1. A first variant of the method is carried out by a personalisation centre 6, to provide a patch to the first smart card 2. A second variant is carried out by the personalisation centre 6 to provide patches for the second, third and fourth smart cards 3-5, via intermediate entities. A third variant of the method is carried out by a first conditional access (CA) system 7 and a second CA system 8. A fourth variant is carried out by a broadcast transmitter 9 and a system including a video-on-demand (VOD) server 10 and a server 11 for transmitting entitlement management messages (EMMs).

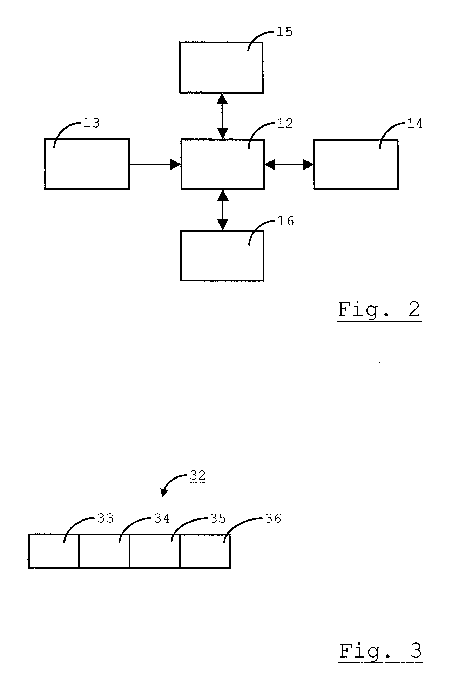

Functional components of an integrated circuit in a smart card are illustrated in Fig. 2. The smart card includes a processor 12, mask Read-Only Memory (ROM) 13, Random Access Memory (RAM) 14 and Electronically Erasable Programmable Read Only Memory (EEPROM) 15. In addition, it includes a serial interface 16. Advantageous alternative embodiments of the smart card include a cryptographic co-processor and/or a battery. Suitable smart cards are those of a contact type or contactless type. However, Figs. 1 and 2 show only smart cards 2-5 of the contact type. In all cases, the smart card includes a physical interface to a read/write unit (not shown in Fig. 2) in a data processing system external to the smart card. In a contact type smart card, such an interface will include an arrangement of contact pads for contact with corresponding contact pins in the read/write unit. A contactless smart card would include an antenna arrangement, as is known in the art.

It is observed that the methods described herein are equally applicable to the provision of patches to other types of portable processing devices with a physical interface to a read/write unit in an external data processing device. Another example of such a device is a card conformant to the PCMCIA standard, or a processing device comprised in a Universal Serial Bus (USB) key. Further examples will occur to the skilled person. Furthermore, the methods described herein are also applicable to provide patches to secure software agent that fulfil functions similar to those of a smart card and are directly installed in a set-top box or similar decoder system.

The mask ROM 13 contains the operating system of the chip and is made as part of the fabrication process. The contents of the mask ROM 13 cannot be changed. In the example of Fig. 1, the contents of the mask ROM 13 are the same for each of the smart cards 2-5, except for a unique smart card serial number and an owner identification which differs per set of one or more smart cards provided to a particular entity making them available to end users. In an alternative embodiment, even the owner identification value and/or smart card serial number are stored in a memory unit that is physical re-writable, but the smart card is arranged to prevent re-programming of at least the owner identification value. Prevention mechanisms include masking of an optically erasable programmable read-only memory (not shown), or a suitable configuration of a memory control routine in the mask ROM 13.

The RAM 14 forms the memory working space to be used by the processor 12 whilst executing programs stored in the mask ROM 13 and/or in the EEPROM 15. The RAM 14 is a type of volatile memory.

The EEPROM 15 holds application data and additional application programs. It is a type of non-volatile memory that allows data to be written and read under program control. Its contents are preserved even when no power is provided to the chip. Another type of re-writable non-volatile memory could be used to implement the methods described herein, not only an EEPROM 15.

An application in the present context is a program, or software, implementing a function performed by the smart card. Certain applications are installed before the smart cards are physically distributed to end-users. This entails loading the code into the EEPROM 15. Then, the smart card is configured to execute the code on issuance of an appropriate command. Depending on the type of smart card, filter values used by the Operating System will have to be adjusted to ensure that the code is executed when an instruction to this effect is provided through the serial interface 16, or a call is made by another application or software routine. Pointers to locations in memory, e.g. RAM 14 or EEPROM 15 may also have to be adjusted to allow the application to be installed to write to or read from those memory locations.

At least one of the functions performed by an application on the smart cards 2-5 is advantageously a content protection function, specifically a function in the cryptographic processing of data. For example, in the system shown in Fig. 1, the second smart card 3 and third smart card 4 decrypt input data provided in Entitlement Control Messages (ECMs) and Entitlement Management Messages (EMMs) broadcast by broadcast transmitter 9 to first and second Integrated Receiver Decoder Devices (IRDs) 17,18 over a broadcast network 19 in accordance with, for example the Digital Video Broadcasting (DVB) standard Common Scrambling Algorithm, or a comparable standard. Similarly, the fourth smart card 5 decrypts information provided in ECMs by VOD server 10, and information provided in EMMs by the server 11 across a communication network 20, for example the Internet, to a third IRD 21.

Content data is stored on a clear content server 22. In a content broadcast system, a first scrambling unit 23 scrambles content data received from the clear content server 22 using a series of consecutive control words (CWs). The CWs are inserted into ECMs by the first CA system 7, which returns the ECMs for encryption by the first scrambling unit 23. The first scrambling unit 23 and first CA system 7 can be combined into one. The first CA system 7 also inserts data representative of a required patch level into some or all of the ECMs. Because the ECM is encrypted, the data representative of the required patch level is also encrypted. The first CA system 7 also provides EMMs, using information received from a first subscriber management system (SMS) 24. The first SMS 24 has access to a database storing details of the second and third smart cards 3,4 issued to subscribers to a broadcast service. A multiplexing unit 25 multiplexes streams of ECMs, EMMs and scrambled content data into a transport stream, which is provided to subscribers by the broadcast transmitter 9. Except for the insertion of data representative of a required patch level, the operation of the broadcast system is more or less standard.

In a video-on-demand type of content distribution, clear content data is provided by the clear content server 22 to a second scrambling unit 26. The second scrambling unit 26 scrambles the content data so as to be de-cryptable using a series of varying CWs. Again, the CWs are provided to the second CA system 8, which returns ECMs including the control word information. Some or all of the ECMs include information representative of a required patch level, which is made known to the second CA system 8, as it is to the first CA system 7, in a manner to be described. At least the control word information and required patch level data in the ECMs are encrypted. The scrambled content data and ECMs are stored for subsequent play-out on the VOD server 10. The VOD system is similar to the broadcast system, in that the second CA system 8 is in communication with a second SMS 27, arranged to store information relating to the fourth smart card 5, provided to a user of the VOD system. The information includes the services the fourth smart card has access to, as well as a unique identification of the fourth smart card, for example its serial number. The server 11 for transmitting EMMs provides EMMs to a user of the fourth smart card 5 which allow the CWs in the ECMs stored on VOD server 11 to be retrieved, together with the data representative of the required patch level. The operation of a VOD system as described above is known as such, except for the provision of data representative of a required patch level with the control word information in the ECMs.

When the second smart card 3 is used to access scrambled content broadcast across the broadcast network 19, it is inserted into the first IRD 17, which is external to the second smart card 3 and provided with a smart card read/write module (not shown). The first IRD 17 includes a de-scrambling unit (not shown) for de-scrambling the scrambled content data using control words it receives from the first smart card 3. The de-scrambled content is made available on a first entertainment device 28, for example a television set. The second smart card 3 includes an application for decrypting the encrypted parts of EMMs and ECMs, which are forwarded to it by the first IRD 17.

The second IRD 18 is connected to a second entertainment device 29. The second IRD 18 exchanges information with the third smart card 4. Similarly, the third IRD 21 exchanges data with the fourth smart card 5 and makes clear content data available to a third entertainment device 30. The second, third and fourth smart cards 3-5 operate in similar fashion, so that this description will mostly use the second smart card 3 as an example.

A patch can be provided to the second smart card 3 to implement a modification to the installed program for cryptographic processing of control word information in ECMs or entitlement information in EMMs. Such a modification may be occasioned by a breach in security discovered during use. Other modifications fix problems in the functionality of non-critical software installed on any of the smart card 3-5. Other patches may enhance the functionality of some or all of the smart cards 3-5.

Each of the smart cards 3-5 has a filter installed. The smart card filters the patches it receives, accepting only those fulfilling programmed filter criteria, using information provided with the patches. An accepted patch is loaded into its EEPROM 15 for subsequent use. To render the patch functional, it must be applied. To this end, the patch includes code that is to be installed for subsequent, repeated use and instructions executed only once during application of the patch. The latter is a process similar to the first-time installation of software.

The filter is preferably implemented in software. It is advantageously part of the operating system, or at least partly stored in mask ROM 13 or another type of once programmable memory. Thus, it cannot be compromised through an attack by a hacker. The filter, the operating system or a special patch loader program maintains information representative of an actual patch level, which is stored in EEPROM 15. This component of the smart card is also responsive to instructions provided with a patch telling it to update the actual patch level as represented by the information stored in the EEPROM 15. This actual patch level thus reflects the number of patches applied in the smart card. In the variant to be described herein in detail, the instructions are included in a message carrying the patch's code. The instructions may alternatively be implicit, in that the smart card increments the actual patch level automatically each time an accepted patch is applied. In another variant, the instructions may be contained in the part of the patch that includes code executed once when the patch is applied.

It will be recalled that at least some of the ECMs include data representative of a required patch level, in addition to the encrypted control word information. Decrypted control word information will only be provided to the de-scrambler in the IRDs 17,18,21 if the required patch level is in a pre-defined relation to the actual patch level. Where the patch level is increased when a patch is applied, the required patch level will have to be lower than, or equal to, the actual patch level, in order for the application providing the decrypted control words to function. Thus, the operators of the first and second CA systems 7,8 ensure that patches are applied in the second, third and fourth smart cards 3-5, even though they have no direct physical control over the smart cards 3-5, which are in the possession of the subscribers.

Patches are created and tested at the patch creation centre (PCC) 1. Each patch is encrypted and provided in a file to the personalisation centre 6. The personalisation centre 6 provides patches for the first, second, third and fourth smart cards 2-5, with target values of identifications of the smart cards for which a particular patch is intended. The personalisation centre 6 provides patches directly to the first smart card 2, using a smart card read/write unit 31. The first smart card 2 is, for example, a card that has yet to be distributed to an end user. The second to fourth smart cards 3-5, which are already in use in the field, are provided with patches through the intermediary of the first and second CA systems 7,8.

Patches are provided in messages to the first, second and third IRDs 17,18,21, which forward them to the second, third and fourth smart cards 2-5. Specifically, the patches are provided in one or several special EMMs generated by the first and second CA systems 7,8. Each of the smart cards 2-5 may receive a patch with its own specific code. Thus, the functionality of only one of them can be enhanced, or a bug in only one of them can be remedied. Subsequently, each of the smart cards 2-5 remains able to process the ECMs. This is so, because each of the smart cards 2-5 is provided with a patch and an instruction to apply the patch. Thus, each of them is instructed to update the actual patch level maintained in its EEPROM 15 to reflect a next level. The functionality provided by the patch may differ between the smart cards. In fact, some of them may be provided with patches that leave the functionality of the software installed on the smart card as it was before application of the patch, i.e. a "dummy patch".

The patches are carried in messages addressed at the link level, i.e. having the address of the IRDs 17,18,21. They are also provided with a target value of at least one identification. This is thus a form of address at the application level. Corresponding identification values are stored in each of the smart cards 2-5, so that it knows which patch to accept. The format of the identification values is such that it is possible to address a group of smart cards with one value. In other words, the patches need not be addressed to each smart card individually. This makes for more efficient use of the broadcast network 19 and communication network 20, because the messages carrying the patches can be broadcast or multicast.

At least one of the special EMMs carrying a patch includes a target owner identification. The filter in the smart card compares the target owner identification with the owner identification stored in the smart card. The smart card is allowed to accept the patch only if the two values correspond. It will be recalled that owner identification values are unique to providers of smart cards. Thus, the operator of the first CA system 7 will have a different owner identification value from the value assigned to the operator of the second CA system 8. This is particularly useful where several operator broadcast, multicast or unicast the special EMMs across the same network, for example the Internet.

The special EMMs carrying a patch also include a target model identification number. Each of the smart cards 2-5 is configured to store an actual model identification value in EEPROM 15. The actual model identification value evolves over the lifetime of the smart card to reflect changes in the software configuration of the smart card. The format of a model identification value 32 is shown in Fig. 3. It is a unique value representing a certain layout of the EEPROM 15 (number of sectors, products and patches). Four bits are used to encode a major model version 33, four bits to encode a minor model version 34, eight bits to encode a build number 35 and eight bits to encode a variant number 36. A patch is only accepted if the actual model number is in a pre-defined relation to the target model identification value provided with the patch. At least the major and minor model versions 33,34 should correspond, for example, or the entire model number should be the same.

The first part of the model identification value 32 reflects the hardware configuration of the smart card integrated circuit. The second part the memory layout corresponding to the software configuration installed. One use of the model number is to provide the second smart card 3 and third smart card 4, which have the same owner identification value, with different functionality whilst they are being used in the field. To do this, the second smart card 3 and third smart card 4 are both sent a splitter patch, which is applied. The patch level is consequently increased. The splitter patch contains code that is executed upon receipt of an appropriate command in an EMM. Only one of the second and third smart cards 3,4 is sent the command to execute the code. When it is executed, the code modifies the variant number 36 of the actual model identification value maintained in the second or third smart card 3,4. Subsequently, two different patches are broadcast by the broadcast transmitter 9. One is provided with the modified model number as target model identification value, the other with the previous model number as target model identification value. Only one of these patches includes code providing enhanced functionality upon application of the patch. The other patch can be a "dummy patch".

The additional functionality may require a different organisation of EEPROM 15. This could include re-locating variables to be used by both the second and the third smart cards 3,4. In that case, the splitter patch, or a separate patch, is sent to both the second and third smart card 3,4. Such a patch will include instructions to re-arrange the memory configuration of the smart card, which instructions are carried out upon application of the patch. Such a memory configuration is adapted to the smart card. For example, it may be possible to have different sizes of memory allocated for different types of data. This could be done to take account of the specific physical memory sizes available on the card, limitations in terms of memory address range, etc. Such a patch would provide the functionality to relocate data to a different part or parts of available memory and/or take into account limitations in storing data. In a preferred variant, the patch is configured, when applied in the client device, to detect a configuration of the client device and to re-arrange the memory configuration in accordance with the detected configuration.

Further information provided in the special EMMs carrying a patch includes a target patch level. The filter in the smart card only allows the smart card to accept a patch if the patch is provided with a target patch level in a pre-defined relation to the actual patch level stored in the EEPROM 15. This ensures that patches are applied in each of the smart cards 2-5 in a pre-determined order. This is advantageous, because code in one patch may require the availability of a function provided by a previous patch in order to function properly. Because the second, third and fourth smart cards 3-5 receive patches over the air, and in messages forwarded by the first, second and third IRDs 17,18,21, there is a possibility that one of those smart cards 3-5 misses a patch. In an alternative variant, a patch not satisfying the pre-defined relation may be accepted, but stored as a file in EEPROM 15 for future application.

A patch is advantageously provided with information reflecting the next level upon application of the patch. This allows a smart card to 'skip' a few levels. The smart card simply applies a patch combining the enhancements provided by a number of patches and updates the actual patch level value in the EEPROM 15 to reflect the next level. This is advantageous if one of the second, third or fourth smart cards 3-5 has not been in communication with any of the first, second and third IRDs 17,18,21 for some time, or if these IRDs have not been in use for a long time. The feature is also useful to speed up the installation of several enhancements to a basic software build in the first smart card 2, which has yet to be distributed.

To protect the smart cards 3-5 against viruses, the patches provided over the broadcast network 19 and the communication network 20 are encrypted and authenticated using keys forming key pairs with keys stored securely in the smart cards 3-5. An EMM carrying part or all of a patch advantageously contains the patch code in scrambled form, so as to allow de-scrambling using one or more control words provided in an ECM or in ECMs. In one variant, the smart cards 3-5 retrieve the Control Words from the ECM or ECMs, and a de-scrambling unit in the IRD 17,18,21 de-scrambles the patch code. For security reasons, it is however preferred to decrypt the encrypted parts of the EMM(s) carrying the patch code in the smart card 3-5. Thus, the smart card 3-5 only receives encrypted patch code.

Preferably, each increase in patch level is followed by an introduction period. During the introduction period, the pre-defined relation between the actual patch level stored in the second, third and fourth smart cards 3-5 and the required patch level indicated in the ECMs is not only satisfied if the second, third and fourth smart cards 3-5 are at the next, i.e. increased, patch level, but also if they are at one patch level below the next patch level. In one variant, the second, third and fourth smart cards 3-5 are sent information indicative of an introduction time interval. The application responsible for enforcing the patch level allows the decryption of encrypted control words during the introduction time interval. The actual time may be obtained by the second, third and fourth smart cards 3-5 from time stamps in scrambled entitlement messages (ECMs and/or EMMs), from an internal clock, or from a clock in one of the IRDs 17,18,21, as is known in the art.

In a preferred, simpler variant, a patch is communicated to at least one of the second, third and fourth smart cards 3-5 at a first point in time and input data is first provided to at least one of the smart cards 3-5 with data representative of the next required patch level at a second point in time, separated from the first point in time by an introduction time interval. Thus, the smart cards 3-5 need not keep track of time for this purpose.

It has been observed that the personalisation centre 6 carries out variant of the method of providing patches for software installed on the smart cards 2-5. The personalisation centre 6 obtains patches from the patch creation centre 1. If the smart cards 2-5 are to move up one or more patch levels, at least one of the patches includes program code for substituting or enhancing at least part of a software component installed on one or one of the smart cards 2-5. Other patches may include no code providing a functional enhancement at all, or they may provide a different functional enhancement or modification.

In the shown example, the personalisation centre 6 provides patches in two different ways. Firstly, it directly updates the first smart card 2, by providing it with the appropriate patch and the information corresponding to the information provided to the second, third and fourth smart cards 3-5 in special EMMs. Thus, the first smart card 2 receives the patch with a target owner identification value and a target model identification value, as well as a required patch level and information indicative of the next patch level, the value of which is to be kept in the first smart card 2 upon application of the patch.

Secondly, the personalisation centre 6 provides patches to the first and second CA systems 7,8. Patches for the second and third smart cards 3,4 are provided in a first patch upload file. A patch for the fourth smart card 5 is provided in a second patch upload file. Additionally, a first smart card upload file is created for the first CA system 7 and a second smart upload file is created for the second CA system 8. A smart card upload file includes unique smart card information. The first smart card upload file includes the serial numbers of the second and third smart cards 3,4, as well as the target model identification, required patch level and the value of the next global patch level. Thus, it implicitly includes an instruction to the second and third smart cards 3,4 to update the actual patch level maintained in the second and third smart cards 3,4 to reflect the next level upon application of the patch intended for it. This patch, it will be recalled, is contained in the patch upload file. The first and second patch upload files and first and second smart card upload files are provided to the first and second CA systems 7,8 by transmission across a network or on a data carrier, such as a compact disk. Both files are encrypted and signed by the patch creation centre. Only if the first and second CA systems have the corresponding keys can they access the files and verify their origins.

The invention is not limited to the embodiments described above, which may be varied within the scope of the accompanying claims. For example, some of the fields, such as the major model version 33 of the actual model number stored in a smart card may be stored in a part of the memory that is not re-writable. Also, patches may be broadcast together in one or more special EMMs to all smart cards 3-5, which filter out the correct ones, or they may be multicast and/or unicast separately to those smart cards 3-5 that are actually to apply the patch concerned.

## Claims

1. Method of providing patches for software installed on a plurality of client systems (2-5), each having at least a data processor (12) and memory (13-15) and each being programmed to maintain information representative of an actual patch level and to generate output data by processing input data provided to an installed application with data representative of a required patch level only if the actual patch level is in a pre-defined relation to the required patch level,
which method includes:
obtaining computer program code for inclusion in a patch, the code being arranged to co-operate with at least part of the software installed on a client system (2-5) to perform a certain function after the patch has been applied in the client system, providing a first patch for application in at least one first client system with an instruction to update the actual patch level maintained in the client system (2-5) to reflect a next level, **characterised by** providing a second patch for at least one other of the client systems (2-5) with an instruction to update the actual patch level maintained in the client system to reflect the next level, wherein the code is provided only in the first of the first and second patches.

2. Method according to claim 1 or the pre-amble of claim 1, wherein a target value of at least one identification is provided with each patch, each client system (2-5) having a filter for accepting a patch only if the values are in respective pre-defined relations to corresponding identifications stored in the client system (2-5).

3. Method according to claim 2, wherein a value of a target owner identification is provided with at least the first patch, each client system (2-5) being provided with once programmable memory (13) and having a filter allowing the client system (2-5) to accept a patch only if the target owner identification is in a pre-defined relation to a corresponding owner identification programmed into the once programmable memory.

4. Method according to claim 2 or 3, wherein a value of a target model identification is provided with at least the first patch, each client system (2-5) being provided with programmable memory (15) and having a filter allowing the client system to accept a patch only if the target model identification is in a pre-defined relation to a corresponding model identification stored in the programmable memory (15).

5. Method according to claim 4, further including providing a patch for a client system (2-5), which patch is configured to cause the client system to change the model identification stored in the programmable memory (15) to a different value.

6. Method according to any one of claims 1-5, wherein information indicative of the certain patch level is provided with at least the first patch.

7. Method according to any one of the preceding claims, wherein at least the first patch is provided with information indicative of a patch level required to apply the patch, each client system (2-5) having a filter allowing the client system to apply the patch only if the actual patch level maintained in the client system is in a pre-defined relation to the patch level required to apply the patch.

8. Method according to any one of claims 1-7, wherein a patch is provided in at least one Entitlement Management Message for transfer to at least one client system (3-5) in communication with an associated decoder system (17,3;18,4;21,5), the application in the at least one client system including at least one routine for generating control word data enabling scrambled content data provided to the decoder system (17,3;18,4;21,5) to be de-scrambled from at least parts of Entitlement Control Messages forwarded by the associated decoder system to the client system.

9. Method according to claim 8, wherein the Entitlement Management Messages are transmitted to the decoder system (17,3;18,4;21,5), the decoder system forwarding the Entitlement Management Messages to the client system (3-5).

10. Method according to claim 8 or 9, wherein the application includes at least one routine for decrypting parts of Entitlement Control Messages containing encrypted control words enabling scrambled content data provided to the decoder system to be de-scrambled and wherein at least parts of the Entitlement Management Messages including the patch are encrypted so as to allow them to be decrypted using at least one control word provided to the decoder system in at least one Entitlement Control Message with information representative of a required patch level corresponding to a latest value of the actual patch level maintained in the client system prior to the application of the patch.

11. Method according to any one of the preceding claims, wherein a patch is communicated to at least one of the client systems (2-5) at a first point in time and input data is first provided to at least one of the client systems with data representative of the next required patch level at a second point in time, separated from the first point in time by an introduction time interval.

12. Data processing system including a processor and memory, programmed to execute a method according to any one of claims 1-11.

13. Computer program arranged, when run on a programmable processing system to enable the system to carry out a method according to any one of claims 1-11.

14. Method of processing patches provided to a client system (2-5) having a processor (12) and memory (13-15), an interface (16) for receiving patches and an interface (16) for loading input data for an application installed on the client system (2-5), which method includes maintaining information representative of an actual patch level and generating output data by processing input data provided to the application only if the actual patch level is in a pre-defined relation to a required patch level indicated in information provided with the input data,
wherein the client system (2-5) is configured to update the actual patch level maintained in the client system to reflect a next level upon application of a patch provided with an appropriate instruction,
**characterised by** storing at least one identification value in the client system and allowing the client system to accept a patch only if each stored identification value is in a pre-defined relation to a respective one of a set of at least one target identification value provided with the patch.

15. Method according to claim 14, wherein the client system (2-5) is provided with once programmable memory (13), wherein the stored identification values include an owner identification stored in the once programmable memory (13), and the method includes allowing the client system to accept the patch only if a target owner identification is provided with the patch and the target owner identification is in a pre-defined relation to the owner identification stored in the once programmable memory.

16. Method according to claim 14 or 15, wherein the client system is provided with programmable memory (15) and the method includes allowing the client system to accept a patch only if the patch is provided with a target model identification in a pre-defined relation to a corresponding model identification stored in the programmable memory (15).

17. Method according to any one of claims 14-16, wherein the value of the next level is derived from information provided with the patch.

18. Method according to any one of claims 14-17, including deriving a value of a patch level required to apply the patch from information provided with the patch and allowing the client system (2-5) to apply the patch only if the patch level required to apply the patch is in a pre-defined relation to the actual patch level.

19. Method according to any one of claims 14-18, wherein the patch is received in an Entitlement Management Message, and wherein at least a part of the Entitlement Management Message is decrypted to obtain at least part of the patch.

20. Method according to any one of claims 14-19, including receiving input data including encrypted information with information indicating the required patch level, and running the application to decrypt the encrypted information.

21. Method according to any one of claims 14-20, including accepting a patch,
applying the patch,
updating the maintained actual patch level from a reflection of a previous value to reflect a next patch level, and
subsequent to applying the patch, enabling the application to process input data provided with an indication of a required patch level in the pre-defined relation only to the previous level during a remaining part of an introduction time interval separating a first point in time, prior to application of the patch, from a second point in time, later than the first point in time.

22. Method according to any one of claims 14-21, including
accepting a patch, and
applying the patch, wherein applying the patch includes executing instructions to re-arrange the configuration of at least part of the memory (14,15) in the client system (2-5).

23. Data processing device, including a processor (12), memory (13-15), an interface (16) for receiving patches and an interface (16) for loading input data for an application installed on the data processing device (2-5), wherein the data processing device is programmed to carry out a method according to any one of claims 14-22.

24. Data processing device according to claim 23, wherein the interface (16) for receiving patches and the interface (16) for loading input data include a physical interface to a read/write unit (31) in a data processing system (6;17;18;21) external to the data processing device (2-5).

25. Computer program arranged, when run on a programmable processing system including a processor (12), memory (13-15), an interface (16) for receiving patches and an interface (16) for loading input data to enable the programmable processing system to carry out a method according to any one of claims 14-22.
